# FASCICULE DE BREVET EUROPEEN

(11) **EP 1 415 909 B1**
(45) Date de publication et mention de la délivrance du brevet: **28.12.2005**
(21) Numéro de dépôt: 03292587.7
(22) Date de dépôt: 17.10.2003
(51) Int. Cl.: B64G 1/22, B64G 1/44, H01L 31/045

(54) **Ensemble articule de panneaux de générateur solaire et véhicule spatial**
Gelenkige Sonnenzellenpanelanordnung und Raumfahrzeug
Articulated solar generator panel assembly and spacecraft

(30) Priorité: 29.10.2002 FR 0213499; 01.08.2003 FR 0309510
(43) Date de publication de la demande: 06.05.2004
(73) Titulaire: ALCATEL, 75008 Paris (FR)
(72) Inventeur: Reutenauer, Xavier, 06210 Mandelieu-La-Napoule (FR); Samson, Philippe, 06200 Nice (FR)
(74) Mandataire: Hedarchet, Stéphane

(56) Documents cités:
- EP-A- 0 360 694
- EP-A- 0 754 625
- EP-A- 1 043 228
- DE-U- 8 802 500
- FR-A- 2 635 077
- FR-A- 2 756 028
- US-A- 3 386 128
- US-B1- 6 175 989
- US-B1- 6 343 442

## Description

La présente invention a trait, d'une manière générale, au déploiement de panneaux de générateur solaire d'un véhicule spatial, tel que, mais non limitativement, un satellite en orbite autour de la terre.

On entend ici par "panneau de générateur solaire", l'ensemble des structures planes de ce dernier présentant des surfaces actives optiques, thermiques ou photovoltaïques et notamment :
- des panneaux support d'un réseau de cellules photovoltaïques identiques ou différentes, transformant l'énergie solaire en énergie électrique ;
- des panneaux réflecteurs qui concentrent les rayonnements solaires sur les précédents grâce à un revêtement aux propriétés adéquates ;
- des panneaux utilisés pour leurs caractéristiques thermo-optiques de surface (dissipateurs thermiques).

Les panneaux d'un générateur solaire peuvent être répartis selon des configurations très diverses. Il s'agit classiquement d'une succession longitudinale, parallèle à une direction s'éloignant du corps du véhicule spatial et autour de laquelle le générateur est destiné à tourner pour suivre le soleil. Toutefois, pour augmenter la puissance électrique disponible, il a été proposé de disposer, en plus des panneaux précédents, des panneaux supplémentaires latéraux. On connaît aussi des configurations dans lesquelles les panneaux sont disposés selon une direction transversale, c'est à dire selon une direction transversale à la direction longitudinale précitée selon laquelle s'étend l'étrier ou bras d'éloignement (yoke en anglais) qui relie le générateur au corps du véhicule spatial, et autour de laquelle le générateur est adapté à tourner pour suivre le soleil.

Lors du lancement, ce générateur est replié et ses panneaux sont empilés les uns sur les autres dans une configuration appelée configuration gerbée ou de gerbage.

La mise en service opérationnel du générateur, par exemple lorsque le véhicule est un satellite mis sur son orbite de service, impose de déplier l'empilement de panneaux : on parle alors de dégerbage.

Pour passer de la configuration de gerbage à la configuration déployée, dans laquelle les panneaux solaires sont disposés sensiblement dans un même plan, les panneaux sont articulés deux à deux, soit au moyen d'articulations ayant des éléments adjacents articulés autour d'un axe de pivotement et solidarisés chacun à l'un de deux panneaux voisins, soit au moyen d'articulations reliant des bords parallèles de panneaux.

Les articulations citées en premier lieu servent en général à relier les panneaux de la succession longitudinale précitée (panneaux en ligne), tandis que les articulations décrites en second lieu sont en général utilisées pour relier les panneaux latéraux aux panneaux en ligne.

De façon générale, les articulations actuellement utilisées pour les panneaux solaires se caractérisent par l'existence de frottements entre les pièces en contact. De telles articulations nécessitent une lubrification très difficile à obtenir compte tenu des conditions extrêmes de température et de vide auxquelles est soumis le satellite lors de son lancement , puis dans l'espace après sa mise sur orbite. Dans ces conditions, les matériaux ont tendance à se souder naturellement ou à gripper, ce qui risque de conduire au non-déploiement des panneaux.

En outre, les articulations actuelles assurent généralement le déploiement des panneaux au moyen d'une motorisation spécifique. Les frottements importants et dispersés de ces articulations imposent d'avoir une motorisation importante.

Par ailleurs, afin d'assurer un verrouillage en configuration déployée des panneaux en ligne, les articulations des panneaux sont en général pourvues d'un mécanisme de verrouillage comportant un moyen de blocage tournant, monté sur un premier des deux éléments adjacents et coopérant avec le deuxième des deux éléments adjacents pour assurer le verrouillage des deux panneaux correspondant en configuration déployée de ces deux panneaux. Ce moyen de blocage est solidaire en rotation d'une patte montée mobile en rotation sur le premier des éléments adjacents et verrouillée temporairement en rotation par rappel en butée contre une surface périphérique d'un élément solidaire en rotation du deuxième des deux éléments adjacents. La surface périphérique présente une configuration telle qu'à l'arrivée à la configuration déployée des deux panneaux correspondants, la patte échappe à la surface périphérique et pivote pour amener le moyen de blocage en contact avec le deuxième des deux éléments adjacents afin d'assurer le verrouillage des deux panneaux en configuration déployée.

Le document US 3,386,128 décrit une articulation à lame plastique pour le verrouillage auto-contrôlé de deux panneaux solaires. Cependant, de telles articulations sont fixées aux extremités des panneaux et sont donc limitées à leur fonction mécanique. Le document US 6,343,442, relatif à un générateur solaire avec des liaisons flexibles entre panneaux solaires, souffre du même problème cité ci-dessus.

L'invention a donc pour objectif un ensemble articulé de panneaux de générateur solaire qui ne pénalise pas la mission par leur masse en limitant au juste nécessaire le nombre d'éléments mécaniques et en optimisant l'existence des articulations en leur conférant des fonctions supplémentaires

A cet effet, l'invention a pour objet un ensemble articulé formé d'au moins deux panneaux voisins d'un générateur solaire, articulés deux à deux pour pouvoir passer par pivotement d'une configuration de gerbage, dans laquelle les panneaux sont empilés les uns sur les autres, à une configuration de dégerbage ou déployée, dans laquelle les panneaux sont disposés sensiblement dans un même plan, les deux panneaux étant reliés l'un à l'autre par une articulation,
caractérisé en ce que ladite articulation est formée d'au moins une lame ressort
- joint de Carpentier telle que :
   - en configuration de gerbage et en phase de déploiement, elle génére un couple moteur permanent tendant à mouvoir les panneaux vers la configuration de dégerbage,
   - et, en configuration de dégerbage, elle exerce retenue mécanique des panneaux dans cette dernière configuration.

Ainsi, l'ensemble articulé de panneaux selon l'invention permet d'atteindre une structure mécanique au niveau des articulations de panneaux qui soit optimisée en masse.

Il est ainsi possible de réaliser une cinématique de déploiement de panneaux en ligne et/ou latéraux, suivant laquelle l'ouverture d'un panneau est naturellement engendrée sans aucun moyen supplémentaire de motorisation, ceci grâce à un dispositif mécanique simple et léger qu'est le joint de Carpentier présentant les avantages susmentionnés.

On souligne qu'un tel système pourrait au besoin être transposé par exemple au déploiement de panneaux en ligne ou latéraux les uns par rapport aux autres.

Selon un mode de réalisation de l'invention, ladite articulation entre deux panneaux voisins n'est formée que de joints de Carpentier.

Selon un mode de réalisation de l'invention, lesdits joints de Carpentier se prolongent sous les panneaux qu'ils relient.

Selon un mode de réalisation de l'invention, la pluralité de joints de Carpentier formant la connexion entre deux panneaux voisins est agencée de manière à présenter une succession croisée de joints de Carpentier de manière à être capables de présenter respectivement des couples moteur opposés sous l'effet d'un pliement des deux panneaux voisins.

Selon un mode de réalisation de l'invention, l'acheminement du courant de puissance entre chaque panneau est réalisé par une nappe de câblage utilisant un matériau possédant les mêmes propriétés mécaniques qu'une lame de Carpentier.

Le plus souvent, le séquencement de déploiement des panneaux est électrique, avec mise en oeuvre de dispositifs pyrotechniques, telles que des cisailles pyrotechniques, pour libérer des palettes de retenue des panneaux en configuration de gerbage. Pour ce, les dispositifs pyrotechniques sont chargés de rompre, le moment venu, des tirants de maintien des palettes de retenue, ce qui libère les panneaux de la configuration de gerbage vers la configuration de dégerbage.

Selon un mode de réalisation de l'invention, le véhicule comporte des palettes de retenue des panneaux en configuration de gerbage, et en ce que, en configuration gerbée, lesdites palettes sont comprises dans des plans parallèles à ceux des panneaux, chaque palette étant reliée à une structure fixe du véhicule par au moins un joint de Carpentier, ledit joint de Carpentier étant agencé de manière à exercer un couple moteur tendant à mouvoir les palettes hors de l'espace de déploiement des panneaux.

Selon un mode de réalisation de l'invention, la géométrie et la surface des palettes est choisie de manière à ce que, en configuration gerbée, les palettes ne recouvrent que partiellement la surface du panneau supérieur.

L'invention a également pour objet un véhicule spatial, notamment satellite, caractérisé en ce qu'il comporte un ensemble articulé selon l'invention.

La présente invention va maintenant être décrite avec plus de détails en se référant aux dessins annexés, sur lesquels :
- la figure 1 représente une aile de satellite comportant un ensemble articulé de panneaux solaires en configuration dégerbée selon un mode de réalisation de l'invention,
- la figure 2 représente l'aile de satellite selon une coupe A-A de la figure 1, l'aile étant en configuration gerbée,
- la figure 3 représente l'aile de satellite selon une coupe C-C de la figure 2.

Dans la présente demande, les éléments remplissant des fonctions similaires porteront des références identiques.

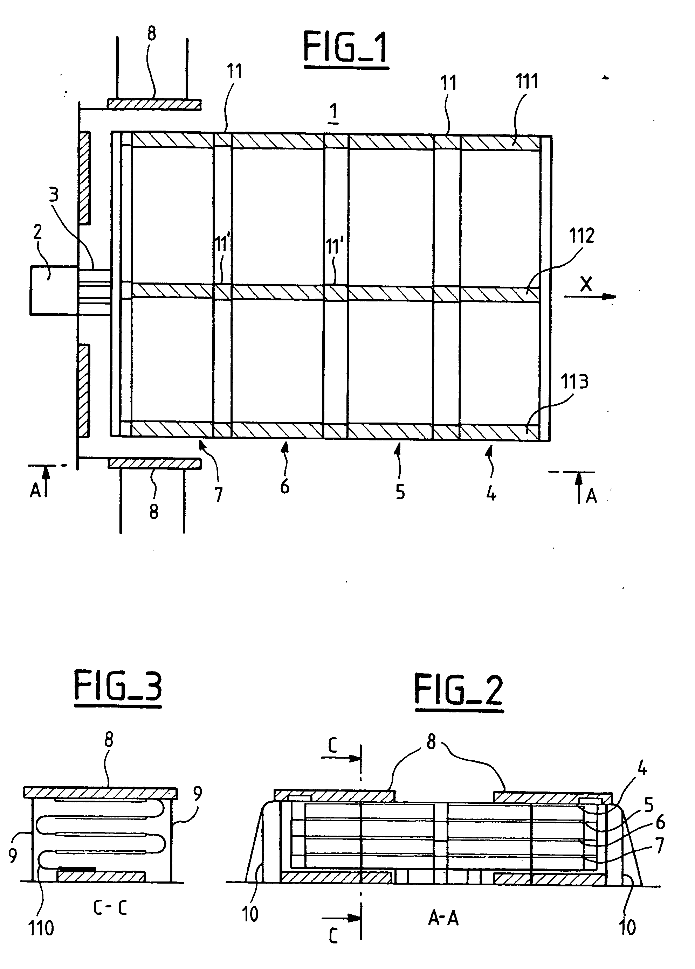

Les figures 1 à 3 représentent très schématiquement et très partiellement un ensemble articulé 1 formé de quatre panneaux faisant partie d'un générateur solaire.

Le reste des panneaux de ce générateur solaire, ainsi que le reste du satellite lui-même n'ont pas été représentés sur les figures, par souci de clarté.

L'ensemble articulé 1 est relié à un mécanisme 2 de rotation de l'ensemble par l'intemédiaire d'un étrier 3.

L'ensemble 1 comporte quatre panneaux rigides déployables, numérotés 4 à 7 sur les figures.

Les panneaux sont articulés deux à deux pour pouvoir passer par pivotement d'une configuration de gerbage représentée sur les figures 2 et 3, dans laquelle ces panneaux sont empilés les uns sur les autres à une configuration déployée, dans laquelle les panneaux sont disposés sensiblement dans un même plan, sur la figure 1.

Dans le mode de réalisation décrit à l'appui des figures 1 à 3, les panneaux destinés à former une succession longitudinale de panneaux (panneaux en ligne) sont les panneaux 4 à 7. Ils sont articulés entre eux, deux à deux, par l'intermédiaire de joints 11 de Carpentier, chacun de ces joints étant solidarisés de chaque côté à l'un de deux bords parallèles de panneaux adjacents. Ces joints 11 de Carpentier permettent, comme expliqué dans la suite, une auto-motorisation du déploiement des panneaux qu'ils relient et sont au nombre de trois par paire de bords parallèles.

Bien entendu, ce nombre d'articulations n'est en aucun cas limitatif.

On soulignera qu'il est usuel pour l'Homme du Métier d'utiliser ce terme de "joint de Carpentier" pour traduire le principe mécanique de fonctionnement de motorisation et de verrouillage associé à une lame ressort. Ainsi, dans la suite, l'utilisation de ce terme "joint de Carpentier" équivaut à celle d'une lame ressort uniquement, sans aucun moyen mécanique supplémentaire, si ce n'est, éventuellement, des moyens de fixation des lames sur le panneau ou les cellules Thin Film.

Il est nécessaire de bien comprendre, dans la présente, que les lames ressorts sont les seuls éléments de jonction entre deux panneaux. C'est en cela que l'invention est intéressante, les fonctions d'auto-motorisation et de verrouillage étant remplies par un même élément peu encombrant.

Sur les figures 2 et 3, les panneaux empilés les uns sur les autres sont retenus par des palettes 8 de retenue qui ont pour fonction de retenir les panneaux en configuration gerbée. Ces palettes sont elles-mêmes maintenues dans cette position par des tirants 9 fixés à une structure fixe du satellite (non représentée). On peut souligner que, dans cette dernière position, les joints de Carpentier forment un profil de coude 110 à chaque repliement, compressés par la pression de retenue des palettes. Les joints 10 de Carpentier travaillent ainsi dans le sens de la flexion et un effort de traction est appliqué contre les palettes.

Pour déclencher le déploiement des panneaux, les tirants sont rompus par des cisailles pyrotechniques (non représentés). De la sorte, les palettes, sous l'effet de joints 10 de Carpentier reliant les palettes à la structure, sont entraînées à effectuer une rotation de 90°, mettant les palettes hors du champ de déploiement de panneaux.

A ce moment, lorsque les palettes de retenue sont libérées, le couple moteur emmagasiné dans les joints de Carpentier assure automatiquement le déploiement des panneaux., comme l'illustre la figure 1. Une fois dans la configuration dégerbée, les joints 11 de Carpentier sont parfaitement rectilignes et assurent le verrouillage des panneaux dans cette position.

Selon un mode de réalisation de l'invention, la pluralité de joints de Carpentier formant la connexion entre deux panneaux voisins est agencée de manière à présenter une succession croisée de joints de Carpentier 11 et 11' de manière à être capables de présenter respectivement des couples moteur opposés sous l'effet d'un pliement des deux panneaux voisins.

On pourra noter que la géométrie et la surface des palettes a été choisie de manière à ce qu'elles ne recouvrent que partiellement la surface du panneau 4 supérieur. Ainsi, on réduit de façon conséquente l'inertie de l'aile.

Les panneaux comportent des cellules solaires et préférentiellement celles employant la technologie bien connue de l'Homme du Métier dite "Thin Film" (de l'anglais Film Mince). Selon un aspect avantageux de l'invention, les panneaux comportent de telles cellules Thin Film et aucune feuille intercalaire de protection n'est prévue entre les différents panneaux en regard en configuration gerbée.

Selon une variante très avantageuse de l'invention, tel que représenté sous forme hachurée sur la figure 1, trois lames 111-113 de Carpentier traversent l'aile selon l'axe principal de déploiement de l'aile, se confondant au niveau des joints 11, 11'. Ce mode procure l'avantage précité de remplir les fonctions des joints de Carpentier au niveau des articulations 11, 11' et la fonction supplémentaire de support du substrat souple en "film mince".

Il est à souligner que, selon un autre mode avantageux de l'invention, l'acheminement du courant entre chaque panneau est réalisé par une nappe de câblage utilisant un matériau, CuBe alliage de cuivre du type du CuBe, possédant les mêmes propriétés mécaniques qu'une lame de Carpentier.

## Revendications

1. Ensemble (1) articulé formé d'au moins deux panneaux (4-7) voisins pour un générateur solaire d'un véhicule spatial, articulés deux à deux pour pouvoir passer par pivotement d'une configuration de gerbage, dans laquelle les panneaux sont empilés les uns sur les autres, à une configuration de dégerbage ou déployée, dans laquelle les panneaux sont disposés sensiblement dans un même plan, les deux panneaux étant reliés l'un à l'autre par au moins une articulation, ladite articulation n'étant formée que d'une lame ressort - joint (11) de Carpentier telle que :
- en configuration de gerbage et en phase de déploiement, elle génère un couple moteur permanent tendant à mouvoir les panneaux vers la configuration de dégerbage,
- et, en configuration de dégerbage, elle exerce une retenue mécanique des panneaux dans cette dernière configuration,
**caractérisé en ce que** ladite lame ressort - joint de Carpentier se prolonge sous les panneaux qu'elle relie pour en former la structure de support des panneaux, et
**en ce que** l'acheminement du courant de puissance entre chaque panneau est réalisé par une nappe de câblage utilisant un matériau possédant les mêmes propriétés mécaniques qu'une lame ressort - joint de Carpentier.

2. Ensemble selon la revendication 1, **caractérisé en ce que** la pluralité de lames ressorts - joints de Carpentier formant la connexion entre deux panneaux voisins est agencée de manière à présenter une succession croisée de lames - joints (11,11') de Carpentier de manière à être capables de présenter respectivement des couples moteur opposés sous l'effet d'un pliement des deux panneaux voisins.

3. Ensemble selon l'une des revendications 1 à 2, **caractérisé en ce que** le véhicule spatial comporte des palettes (8) de retenue des panneaux en configuration de gerbage, et **en ce que**, en configuration gerbée, lesdites palettes sont comprises dans des plans parallèles à ceux des panneaux, chaque palette étant reliée à une structure fixe du véhicule spatial par au moins une seconde lame ressort - joint (10) de Carpentier, ladite seconde lame ressort - joint de Carpentier étant agencée de manière à exercer un couple moteur tendant à mouvoir les palettes hors de l'espace de déploiement des panneaux.

4. Ensemble selon la revendication 3, **caractérisé en ce que** la géométrie et la surface des palettes est choisie de manière à ce que, en configuration gerbée, les palettes ne recouvrent que partiellement la surface du panneau supérieur.

5. Véhicule spatial, notamment satellite, **caractérisé en ce qu'**il comporte un ensemble articulé selon l'une des revendications 1 à 4.

## Patentansprüche

1. Gelenkeinheit (1) für eine Solarzelle eines Raumfahrzeugs, die aus mindestens zwei aneinander stoßenden Panelen (4-7) gebildet wird, die jeweils paarweise mit einem Gelenk verbunden sind, um durch Schwenken von einer gestapelten Konfiguration, in der die Panele aufeinander gestapelt sind, in eine entfaltete oder aufgerichtete Konfiguration zu wechseln, in der die Panele praktisch in einer Ebene angeordnet sind, wobei die beiden Panele durch mindestens ein Gelenk miteinander verbundenen sind, wobei das genannte Gelenk lediglich aus einem Carpentier-Federblattgelenk (11) besteht, so dass:
- es in der gestapelten Konfiguration und in der Entfaltungsphase ein Antriebsmoment erzeugt, das die Panele in die entfaltete Konfiguration bringt,
- und es in der entfalteten Position einen mechanischen Rückhalt der Panele in dieser letztgenannten Position bietet,
**dadurch gekennzeichnet, dass** das genannte Carpentier-Federblattgelenk unter den Panelen verläuft, die es miteinander verbindet, um eine Haltestruktur für die Panele zu bilden, und
**dadurch**, dass die Weiterleitung des Leistungsstroms zwischen den einzelnen Panelen durch eine Kabeldecke gewährleistet wird, in der ein Material eingesetzt wird, das die gleichen mechanischen Eigenschaften aufweist wie ein Carpentier-Federblattgelenk.

2. Einheit gemäß Anspruch 1, **dadurch gekennzeichnet, dass** die Vielzahl der Carpentier-Federblattgelenke, die die Verbindung zwischen zwei aneinander stoßenden Panelen bilden, derart ausgeführt sind, dass die Carpentier-Federblattgelenke (11, 11') kreuzweise angeordnet sind, damit sie beim Zusammenfalten von zwei aneinander stoßenden Panelen jeweils entgegengesetzte Antriebsmomente aufweisen.

3. Einheit gemäß einem der Ansprüche 1 bis 2, **dadurch gekennzeichnet, dass** das Raumfahrzeug Halteplatten (8) für die Panele in der gestapelten Konfiguration umfasst, sowie **dadurch**, dass die genannten Platten in der gestapelten Konfiguration in einer Ebene parallel zu der Panelebene angeordnet sind, wobei jede Platte durch mindestens ein zweites Carpentier-Federblattgelenk (10) mit einer festen Struktur des Raumfahrzeugs verbunden ist, wobei das zweite Carpentier-Federblattgelenk so ausgeführt ist, dass es ein Antriebsmoment ausübt, das die Platten aus dem Bereich zur Entfaltung der Panele bringt.

4. Einheit gemäß Anspruch 3, **dadurch gekennzeichnet, dass** Geometrie und Oberfläche der Platten so gewählt werden, dass die Platten in der gestapelten Konfiguration die Oberfläche des obersten Panels nur teilweise bedecken.

5. Raumfahrzeug, insbesondere ein Satellit, **dadurch gekennzeichnet, dass** es eine Gelenkeinheit gemäß einem der Ansprüche 1 bis 4 umfasst.

## Claims

1. Hinged assembly (1) formed of at least two adjacent panels (4-7) of a solar generator on a space vehicle hinged in pairs to pivot from a stacking configuration, in which the panels are stacked one on the other, to an unstacking or deployed configuration, in which the panels are disposed substantially in the same plane, the two panels being connected together by at least one hinge, said hinge being formed exclusively of a Carpentier leaf spring joint (11) such that:
- in the stacking configuration and in the deployment phase, it generates a continuous driving torque tending to move the panels toward the unstacking configuration, and
- in the unstacking configuration, it mechanically retains the panels in the latter configuration,
**characterised** and in that said Carpentier leaf spring joint extends under the panels that it connects to form the support structure of the panels, and in that power current is routed between panels by a wiring harness using a material having the same mechanical properties as a Carpentier leaf spring joint.

2. Assembly according to claim 1, **characterised in that** the plurality of Carpentier leaf spring joints forming the connection between two adjacent panels provides a crossed succession of Carpentier leaf spring joints (11, 11') to generate respective opposite driving torques upon folding the two adjacent panels.

3. Assembly according to either claim 1 or claim 2, **characterised in that** the space vehicle includes pallets (8) for retaining the panels in the stacking configuration and **in that**, in the stacked configuration, said pallets lie in planes parallel to those of the panels, each pallet being connected to a fixed structure of the space vehicle by at least one second Carpentier leaf spring joint (10), said second Carpentier leaf spring joint being adapted to exert a drive torque tending to move the pallets out of the panel deployment space.

4. Assembly according to claim 3, **characterised in that** the geometry and the area of the pallets is chosen so that, when in the stacked configuration, the pallets cover only part of the surface of the upper panel.

5. Space vehicle, in particular satellite, **characterised in that** it includes a hinged assembly according to one of claims 1 to 4.
